(19) **Europäisches Patentamt / European Patent Office / Office européen des brevets**

(11) **EP 4 471 095 A1**

(12) **EUROPEAN PATENT APPLICATION**
published in accordance with Art. 153(4) EPC

(43) Date of publication:
04.12.2024 Bulletin 2024/49

(21) Application number: 23743374.3

(22) Date of filing: 23.01.2023

(51) International Patent Classification (IPC):
C08L 101/00 (2006.01)    C08F 265/06 (2006.01)
C08L 63/00 (2006.01)

(52) Cooperative Patent Classification (CPC):
C08F 265/06; C08L 63/00; C08L 101/00

(86) International application number:
PCT/JP2023/001941

(87) International publication number:
WO 2023/140382 (27.07.2023 Gazette 2023/30)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 24.01.2022 JP 2022008672

(71) Applicant: Kuraray Co., Ltd.
Kurashiki-shi, Okayama 710-0801 (JP)

(72) Inventors:
• UMEDA, Yasunari
  Tainai-shi, Niigata 959-2691 (JP)
• NAKAMURA, Kimitoshi
  Tainai-shi, Niigata 959-2691 (JP)

(74) Representative: Müller-Boré & Partner
Patentanwälte PartG mbB
Friedenheimer Brücke 21
80639 München (DE)

(54) **CURABLE RESIN COMPOSITION, ADHESIVE, MOLDING MATERIAL, CURED ARTICLE**

(57) An object is to provide a curable resin composition that has excellent dispersibility of acrylic rubber particles in a curable resin and gives a cured article with excellent appearance quality, and to also provide an adhesive, a molding material, and a cured article. Provided is a curable resin composition comprising a curable resin (A) and acrylic rubber particles (B), the acrylic rubber particles (B) having a multilayer structure of two or more layers including an inner layer comprising a crosslinked rubber polymer comprising an acrylic acid ester unit, and an outermost layer comprising a hard polymer, the outermost layer of the acrylic rubber particles (B) having a thickness of 3.5 nm or more. Also provided are an adhesive and a curing agent each comprising the curable resin composition, and a cured article of the curable resin composition.

EP 4 471 095 A1

## Description

Technical Field

The present invention relates to a curable resin composition, an adhesive, a molding material, and a cured article.

Background Art

Cured articles of curable resins, such as epoxy resins, unsaturated polyester resins, vinyl ester resins, and phenolic resins, are widely used in civil engineering and construction materials, electrical and electronic materials, fiber-reinforced composite materials, adhesives, and the like because of their excellent heat resistance, mechanical strength, dimensional accuracy, etc. On the other hand, cured articles of curable resins have low fracture toughness and exhibit brittle characteristics, resulting in poor impact resistance and/or adhesive strength.

As a method of enhancing the toughness of cured articles of curable resins, a method of mixing rubber components etc. is known. PTL 1 discloses a core-shell polymer-containing epoxy resin composition, wherein the shell part has a glass transition temperature of less than 25°C and the shell part contains a monomer having an epoxy group. PTL 2 discloses an epoxy resin composition comprising a rubber-containing polymer and an epoxy resin, wherein the rubber-containing polymer contains at least one rubbery polymer and at least one vinyl monomer part, and the vinyl monomer part has a unit based on polyfunctional (meth)acrylate, a unit based on at least one monomer selected from the group consisting of epoxy group-containing (meth)acrylates and aromatic vinyl monomers, and a unit based on alkyl (meth)acrylate.

However, the core-shell polymer of PTL 1 had a problem that because of the low glass transition temperature of the outermost layer, the particles of the core-shell polymer were easily agglomerated due to collision between them in the production process of the core-shell polymer-containing epoxy resin composition, and the dispersibility in the epoxy resin tended to decrease.

The rubber-containing polymer of PTL 2 had a problem that the rubber-containing polymer could not be well dispersed in the epoxy resin unless the rubber-containing polymer and the epoxy resin were premixed using an organic solvent such as methyl ethyl ketone (MEK) or thoroughly mixed by high-speed shear agitation or using a kneader such as three rolls.

Citation List

Patent Literature

PTL 1: WO2015/53289
PTL 2: WO2020/213642

Summary of Invention

Technical Problem

An object of the present invention is to provide a curable resin composition that has excellent dispersibility of acrylic rubber particles in a curable resin and gives a cured article with excellent appearance quality, and to also provide an adhesive, a molding material, and a cured article.

Solution to Problem

As a result of extensive study to achieve the above object, the present inventors have completed the present invention, including the following aspects.

[Item 1]

A curable resin composition comprising a curable resin (A) and acrylic rubber particles (B),

the acrylic rubber particles (B) having a multilayer structure of two or more layers including an inner layer comprising a crosslinked rubber polymer comprising an acrylic acid ester unit, and an outermost layer comprising a hard polymer,

the outermost layer of the acrylic rubber particles (B) having a thickness of 3.5 nm or more.

[Item 2]

The curable resin composition according to Item 1, wherein the curable resin (A) is at least one member selected from the group consisting of an epoxy resin, an unsaturated polyester resin, epoxy (meth)acrylate, and urethane (meth) acrylate.

[Item 3]

The curable resin composition according to Item 1 or 2, wherein the outermost layer of the acrylic rubber particles (B) comprises at least one member selected from the group consisting of a carboxyl group-containing monomer unit (x) and an epoxy group-containing monomer unit (y).

[Item 4]

The curable resin composition according to any one of Items 1 to 3, wherein the carboxyl group-containing monomer unit (x) is at least one member selected from the group consisting of acrylic acid and methacrylic acid.

[Item 5]

The curable resin composition according to any one of Items 1 to 4, wherein the epoxy group-containing monomer unit (y) is glycidyl (meth)acrylate.

[Item 6]

The curable resin composition according to any one of Items 1 to 5, wherein the outermost layer of the acrylic rubber particles (B) has a glass transition temperature of 50°C or more.

[Item 7]

The curable resin composition according to any one of Items 1 to 6, wherein part of the outermost layer of the acrylic rubber particles (B) is covalently bonded to the inscribed crosslinked rubber polymer.

[Item 8]

An adhesive comprising the curable resin composition according to any one of Items 1 to 7.

[Item 9]

A molding material comprising the curable resin composition according to any one of Items 1 to 7.

[Item 10]

A cured article of the curable resin composition according to any one of Items 1 to 7.

Advantageous Effects of Invention

According to the present invention, it is possible to obtain a curable resin composition that has excellent dispersibility of acrylic rubber particles in a curable resin and gives a cured article with excellent appearance quality, an adhesive, a molding material, and a cured article.

Description of Embodiments

In the present specification, references to the singular ("a," "an," "the," etc.) include the singular and plural unless the present specification clearly indicates otherwise or the context would be clearly contradictory.
The curable resin composition of the present invention comprises a curable resin (A) and acrylic rubber particles (B).

Curable Resin (A)

The curable resin (A) is not particularly limited as long as it is a compound having at least two curable functional groups, such as epoxy groups or polymerizable unsaturated bonds, in the molecule, and known and commonly used resins, such as an epoxy resin, an unsaturated polyester resin, epoxy (meth)acrylate, and urethane (meth)acrylate, can be used.

The epoxy resin is not particularly limited as long as it is a compound having at least two epoxy groups in the molecule.

Examples of the epoxy resin include a bisphenol A type epoxy resin, a bisphenol F type epoxy resin, a bisphenol AD type epoxy resin, a bisphenol E type epoxy resin, a naphthalene type epoxy resin, a biphenyl type epoxy resin, a dicyclopentadiene type epoxy resin, a phenol novolac type epoxy resin, an alicyclic epoxy resin, and a glycidylamine type epoxy resin. Other examples include modified epoxy resins, such as a urethane-modified epoxy resin, a rubber-modified epoxy resin, and a chelate-modified epoxy resin.

Other examples of the epoxy resin include copolymers of epoxy resins mentioned above and other polymers, and those in which part of the epoxy resins is replaced with a reactive diluent having an epoxy group.

Examples of copolymers of epoxy resins and other polymers include polyether-modified epoxy resin and silicone-modified epoxy resin.

Examples of the reactive diluent include polyalkylene glycol diglycidyl ethers, such as polyethylene glycol diglycidyl ether and polypropylene glycol diglycidyl ether; glycol diglycidyl ethers, such as neopentyl glycol diglycidyl ether and 1,4-butanediol diglycidyl ether; diglycidyl esters of aliphatic polybasic acids, such as adipic acid diglycidyl ester and maleic acid diglycidyl ester; glycidyl ethers of dihydric or higher polyhydric aliphatic alcohols, such as trimethylolpropane triglycidyl ether and trimethylolethane triglycidyl ether; monoglycidyl compounds, such as resorcin glycidyl ether, t-butylphenyl glycidyl ether, and allyl glycidyl ether; and monoalicyclic epoxy compounds, such as 2-(3,4-epoxycyclohexyl) ethyltrimethoxysilane.

These epoxy resins may be used singly or in a combination of two or more.

Preferred among the above epoxy resins are bisphenol A type epoxy resin, bisphenol F type epoxy resin, and alicyclic epoxy resin because of the excellent heat resistance of cured articles and relatively low cost.

The epoxy equivalent of the epoxy resin used in the present invention is not particularly limited, but is, for example, within the range of 80 to 2000. Such epoxy resins can be obtained by known methods, such as a method in which polyhydric alcohol or polyhydric phenol is reacted with an excess amount of epihalohydrin in the presence of a base.

The compound having at least two polymerizable unsaturated bonds in the molecule used in the present invention is not particularly limited, and examples include a curable resin having radically polymerizable carbon-carbon double bonds. Specific examples include an unsaturated polyester resin, epoxy (meth)acrylate, urethane (meth)acrylate, polyether (meth)acrylate, acrylated (meth)acrylate, and the like. These may be used singly or in a combination of two or more. Preferred among these from an economic point of view are an unsaturated polyester resin, epoxy (meth)acrylate, and urethane (meth)acrylate.

The unsaturated polyester resin is not particularly limited, and examples include those obtained from the condensation reaction of polyhydric alcohols and unsaturated polycarboxylic acids or anhydrides thereof.

Examples of polyhydric alcohols include dihydric alcohols, such as ethylene glycol, 1,2-propylene glycol, 1,3-propylene glycol, and 1,4-butanediol. These polyhydric alcohols may be used singly or in a combination of two or more.

Examples of unsaturated polycarboxylic acids include divalent carboxylic acids, such as fumaric acid and maleic acid. These unsaturated polycarboxylic acids may be used singly or in a combination of two or more.

The unsaturated polyester resin can be obtained by subjecting a polyhydric alcohol mentioned above and an unsaturated polycarboxylic acid or an anhydride thereof to a condensation reaction in the presence of an esterification catalyst, such as organic titanate (e.g., tetrabutyl titanate) or an organic tin compound (e.g., dibutyltin oxide).

The epoxy (meth)acrylate is an addition reaction product obtained by the addition reaction of a polyepoxide such as bisphenol A type epoxy resin, an unsaturated monobasic acid such as (meth)acrylic acid, and optionally a polybasic acid in the presence of a catalyst, and is generally referred to as a vinyl ester resin, including mixtures obtained by optionally mixing the addition reaction product with vinyl monomers.

The epoxy (meth)acrylate is not particularly limited, and can be obtained, for example, by subjecting a polyfunctional epoxy compound having at least two epoxy groups in the molecule, an unsaturated monocarboxylic acid, and optionally a polyvalent carboxylic acid to an esterification reaction in the presence of an esterification catalyst.

Specific examples of polyfunctional epoxy compounds include those mentioned above as examples of the epoxy resin.

Examples of unsaturated monocarboxylic acids include acrylic acid, methacrylic acid, and the like. Further, part of such an unsaturated monocarboxylic acid can be replaced with cinnamic acid, crotonic acid, sorbic acid, and a half ester of unsaturated dibasic acid.

Examples of polyvalent carboxylic acids include maleic acid, maleic anhydride, fumaric acid, itaconic acid, itaconic anhydride, citraconic acid, adipic acid, azelaic acid, phthalic acid, phthalic anhydride, isophthalic acid, terephthalic acid, trimellitic anhydride, hexahydrophthalic anhydride, 1,6-cyclohexanedicarboxylic acid, dodecanedioic acid, dimer acid, and the like.

A conventionally known compound can be used as the esterification catalyst. Specific examples include tertiary amine compounds, such as triethylamine, N,N-dimethylbenzylamine, and N,N-dimethylaniline; quaternary ammonium salts, such as trimethylbenzylammonium chloride and pyridinium chloride; phosphonium compounds, such as triphenylphosphine, tetraphenylphosphonium chloride, tetraphenylphosphonium bromide, and tetraphenylphosphonium iodide; sulfonic acid compounds, such as p-toluenesulfonic acid; organic metal salts, such as zinc octanoate; and the like.

The reaction method and reaction conditions for performing the above reaction are not particularly limited. In the esterification reaction, it is more preferable to add a polymerization inhibitor and/or molecular oxygen to the reaction system in order to prevent gelation due to polymerization.

The urethane (meth)acrylate is not particularly limited, and examples include one obtained by the urethanization reaction of a polyisocyanate compound, a polyol compound, and a hydroxyl group-containing (meth)acrylate compound, one obtained by the urethanization reaction of a polyol compound and a (meth)acryloyl group-containing isocyanate compound, and one obtained by the urethanization reaction of a hydroxyl group-containing (meth)acrylate compound and a polyisocyanate compound.

Specific examples of polyisocyanate compounds include 2,4-tolylene diisocyanate and hydrides thereof, 2,4-tolylene diisocyanate isomers and hydrides thereof, diphenylmethane diisocyanate, hydrogenated diphenylmethane diisocyanate, hexamethylene diisocyanate, hexamethylene diisocyanate trimer, isophorone diisocyanate, xylene diisocyanate, hydrogenated xylene diisocyanate, dicyclohexylmethane diisocyanate, tolidine diisocyanate, naphthalene diisocyanate, and triphenylmethane triisocyanate; or Millionate MR and Coronate L (produced by Nippon Polyurethane Industry Co., Ltd.), Burnock D-750 and Crisvon NX (produced by Dainippon Ink & Chemicals, Inc.), Desmodur L (produced by Sumitomo Bayer Urethane Co., Ltd.), Takenate D102 (produced by Takeda Pharmaceutical Co., Ltd.), and the like.

Examples of polyol compounds include polyether polyol, polyester polyol, polybutadiene polyol, adducts of bisphenol A and alkylene oxides such as propylene oxide or ethylene oxide, and the like. The number average molecular weight of the polyether polyol is preferably within the range of 300 to 5,000, and particularly preferably within the range of 500 to 3,000. Specific examples include polyoxyethylene glycol, polyoxypropylene glycol, polytetramethylene glycol, polyoxymethylene glycol, and the like. The number average molecular weight of the polyester polyol is preferably within the range of 1,000 to 3,000.

The hydroxyl group-containing (meth)acrylate compound is a (meth)acrylate compound having at least one hydroxyl group in the molecule. Examples of the hydroxyl group-containing (meth)acrylate compound include 2-hydroxyethyl (meth)acrylate, 2-hydroxypropyl (meth)acrylate, 3-hydroxybutyl (meth)acrylate, polyethylene glycol mono(meth)acrylate, polypropylene glycol mono(meth)acrylate, and the like.

The (meth)acryloyl group-containing isocyanate compound is a type of compound that shares at least one (meth)acryloyl group and isocyanate group in the molecule. Examples include 2-(meth)acryloyloxymethyl isocyanate and 2-(meth)acryloyloxyethyl isocyanate; or a compound obtained by subjecting a hydroxyl group-containing (meth)acrylate compound and polyisocyanate to a urethanization reaction at a molar ratio of 1:1.

The reaction method in the above urethanization reaction is not particularly limited. Further, the reaction conditions, such as reaction temperature and reaction time, may be appropriately set so that the reaction is completed, and are not particularly limited. For example, when a polyisocyanate compound, a polyol compound, and a hydroxyl group-containing (meth)acrylate compound are subjected to an urethanization reaction, first, the polyisocyanate compound and the polyol compound may be subjected to an urethanization reaction so that the ratio of isocyanate groups of the polyisocyanate compound and hydroxyl groups of the polyol compound (isocyanate groups/hydroxyl groups) is within the range of 3.0 to 2.0, thereby producing an isocyanate group-terminated prepolymer, followed by an urethanization reaction so that hydroxyl groups of hydroxyl group-containing (meth)acrylate and isocyanate groups of the prepolymer are approximately equivalent.

During the above reaction, it is preferable to use an urethanization catalyst in order to promote the urethanization reaction. Examples of the urethanization catalyst include tertiary amine compounds such as triethylamine, and metal salts such as di-n-butyltin dilaurate; however, any general urethanization catalyst can be used. In addition, during the above reaction, it is preferable to add a polymerization inhibitor and/or molecular oxygen to prevent gelation due to polymerization.

Acrylic Rubber Particles (B)

The acrylic rubber particles (B) are particles containing an acrylic crosslinked rubber polymer obtained by an emulsion polymerization method, and are preferably multilayered rubber particles with two or more layers including an outermost layer containing a hard polymer (P) and a layer containing a crosslinked rubber polymer (Q) in contact with and covered by the outermost layer. Examples of the multilayered rubber particles include a two-layer structure (Q-P) in which a core is a crosslinked rubber polymer (Q) and an outer shell (outermost layer) is a thermoplastic polymer (P), a three-layer structure (R-Q-P) in which a core is a crosslinked polymer (R), an inner shell is a crosslinked rubber polymer (Q), and an outer shell (outermost layer) is a thermoplastic polymer (P), and a four-layer structure (Q-R-Q-P) in which a core is a crosslinked rubber polymer (Q), a first inner shell is a crosslinked polymer (R), a second inner shell is a crosslinked rubber polymer (Q), and an outer shell (outermost layer) is a thermoplastic polymer (P).

In the acrylic rubber particles, the mass ratio of the layer other than the outermost layer (hereinafter, the layer other than the outermost layer is also referred to as "inner layer"; for example, Q, R + Q, and Q + R + Q described above correspond to inner layers) and the outermost layer (inner layers/outermost layer) is preferably 50/50 to 95/5, and more preferably 60/40 to 90/10. In the inner layer, the percentage of the layer(s) containing the crosslinked rubber polymer (Q) is preferably 20 to 70 mass%, and more preferably 30 to 50 mass%.

The average particle size of the acrylic rubber particles is preferably 0.05 to 0.5 pm, more preferably 0.06 to 0.4 um, even more preferably 0.08 to 0.35 um, and still even more preferably 0.1 to 0.3 um. When using acrylic rubber particles with an average particle size within such a range, particularly with an average particle size of 0.1 to 0.3 um, toughness can be achieved with a small amount thereof, and therefore the rigidity and surface hardness of the molded article are not impaired. The average particle size in the present specification is the average in the volume-based particle size distribution measured by a light scattering method (volume average particle size), or the average of particle sizes measured from electron micrographs.

The hard polymer (P) that constitutes the outermost layer of the acrylic rubber particles is a polymer having a glass transition temperature of 30°C or more, preferably 50°C or more, more preferably 60°C or more, and even more preferably 70°C or more. The upper limit of the glass transition temperature of the hard polymer (P) is not particularly limited, but is, for example, 150°C or less, and preferably 130°C or less.

The formulation of the hard polymer (P) is not particularly limited, but preferably contains a methacrylic acid alkyl ester (hereinafter also referred to as "methacrylic acid $C_{1-8}$ alkyl ester") having a $C_{1-8}$ alkyl group and at least one monomer unit selected from the group consisting of a carboxyl group-containing monomer unit (x) and an epoxy group-containing monomer unit (y). The methacrylic acid alkyl ester unit refers to a structural unit introduced by the polymerization of a methacrylic acid alkyl ester, the carboxyl group-containing monomer unit refers to a structural unit introduced by the polymerization of a carboxyl group-containing ethylenically unsaturated monomer, and the epoxy group-containing monomer unit refers to a structural unit introduced by the polymerization of an epoxy group-containing ethylenically unsaturated monomer.

The methacrylic acid alkyl ester having a $C_{1-8}$ alkyl group is preferably, for example, methyl methacrylate.

The carboxyl group-containing monomer unit (x) is preferably acrylic acid or methacrylic acid.

Examples of the epoxy group-containing monomer unit (y) include epoxy group-containing ethylenically unsaturated monomers, such as glycidyl (meth)acrylate, allyl glycidyl ether, and 3,4-epoxycyclohexyl (meth)acrylate; and preferably glycidyl (meth)acrylate.

When the hard polymer (P) contains a methacrylic acid alkyl ester unit having a $C_{1-8}$ alkyl group, the content thereof is preferably 80 to 99.9 mass%, and more preferably 90 to 99.5 mass%, based on the mass of the hard polymer (P).

When the hard polymer (P) contains a carboxyl group-containing monomer unit (x), the content thereof is preferably 0.1 to 20 mass%, and more preferably 0.5 to 10 mass%, based on the mass of the hard polymer (P).

When the hard polymer (P) contains an epoxy group-containing monomer unit (y), the content thereof is preferably 0.1 to 20 mass%, and more preferably 0.5 to 10 mass%, based on the mass of the hard polymer (P).

The hard polymer (P) may contain other monofunctional monomer units, and examples include acrylic acid esters, such as methyl acrylate, ethyl acrylate, propyl acrylate, n-butyl acrylate, and 2-ethylhexyl acrylate; and aromatic vinyl monomers, such as styrene. The monofunctional monomer unit refers to a structural unit introduced by the polymerization of a monofunctional monomer.

The outermost layer may be a single layer composed of one hard polymer (P) or a multilayer composed of two or more hard polymers (P).

The crosslinked rubber polymer (Q) that constitutes the inner layer of the acrylic rubber particles contains an acrylic acid ester monomer unit. The acrylic acid ester monomer unit refers to a structural unit introduced by the polymerization of an acrylic acid ester. Examples of the acrylic acid ester monomer unit include acrylic acid ester units having a $C_{1-8}$ alkyl group, such as methyl acrylate, ethyl acrylate, propyl acrylate, n-butyl acrylate, and 2-ethylhexyl acrylate. In terms of the toughness of the cured article, n-butyl acrylate and 2-ethylhexyl acrylate are preferred, and n-butyl acrylate is more preferred.

The crosslinked rubber polymer (Q) may contain a monofunctional monomer unit other than acrylic acid esters, and a polyfunctional monomer unit. The monofunctional monomer unit refers to a structural unit introduced by the polymerization of a monofunctional monomer, and the polyfunctional monomer unit refers to a structural unit introduced by the polymerization of a polyfunctional monomer.

The content of the acrylic acid ester monomer unit in the crosslinked rubber polymer (Q) is preferably 10 to 100 mass%, and more preferably 15 to 95 mass%, based on the mass of the crosslinked rubber polymer (Q).

The content of the monofunctional monomer unit other than acrylic acid esters in the crosslinked rubber polymer (Q) is preferably 0 to 90 mass%, and more preferably 5 to 85 mass%, based on the mass of the crosslinked rubber polymer (Q).

The polyfunctional monomer unit in the crosslinked rubber polymer (Q) is preferably 0.01 to 3 mass%, and more preferably 0.1 to 2 mass%, based on the mass of the crosslinked rubber polymer (Q).

In a preferred embodiment of the present invention, the inner layer has an intermediate layer composed of a crosslinked rubber polymer (Q), and a core composed of a crosslinked polymer (R) and in contact with and covered by the intermediate layer (central layer) (inner layer = R + Q).

The formulation of the crosslinked polymer (R) is not particularly limited as long as the effects of the present invention are not impaired, but is preferably composed of a methyl methacrylate unit, a monofunctional monomer unit other than methyl methacrylate, and a polyfunctional monomer unit. The methyl methacrylate unit refers to a structural unit introduced by the polymerization of methyl methacrylate.

The amount of the methyl methacrylate unit that constitutes the crosslinked polymer (R) is preferably 40 to 98.5 mass%, and more preferably 80 to 95 mass%, based on the mass of the crosslinked polymer (R).

The amount of the monofunctional monomer unit other than methyl methacrylate that constitutes the crosslinked polymer (R) is 1 to 59.5 mass%, and preferably 5 to 20 mass%, based on the mass of the crosslinked polymer (R).

Examples of the monofunctional monomer other than methyl methacrylate preferably include acrylic acid esters, such as methyl acrylate, ethyl acrylate, propyl acrylate, n-butyl acrylate, and 2-ethylhexyl acrylate; and aromatic vinyl compounds, such as styrene.

The amount of the polyfunctional monomer unit that constitutes the crosslinked polymer (R) is preferably 0.05 to 0.4 mass%, and more preferably 0.1 to 0.3 mass%, based on the mass of the crosslinked polymer (R).

The amount of the crosslinked polymer (R) is preferably 5 to 40 mass%, more preferably 7 to 35 mass%, and even more preferably 10 to 30 mass%, based on the amount of the multilayered rubber particles.

Examples of the acrylic acid esters used in the hard polymer (P), the crosslinked rubber polymer (Q), and the crosslinked polymer (R) include alkyl acrylate esters having a $C_{1-8}$ alkyl group, such as methyl acrylate, ethyl acrylate, n-propyl acrylate, n-butyl acrylate, s-butyl acrylate, t-butyl acrylate, n-butyl methyl acrylate, n-heptyl acrylate, 2-ethylhexyl acrylate, and n-octyl acrylate. These acrylic acid esters can be used singly or in a combination of two or more. Preferred among these are methyl acrylate and/or n-butyl acrylate.

Examples of the polyfunctional monomer units used in the crosslinked rubber polymer (Q) and the crosslinked polymer (R) include ethylene glycol dimethacrylate, propylene glycol dimethacrylate, triethylene glycol dimethacrylate, hexanediol dimethacrylate, ethylene glycol diacrylate, propylene glycol diacrylate, triethylene glycol diacrylate, allyl methacrylate, and triallyl isocyanurate.

The monofunctional monomer unit other than methyl methacrylate in the crosslinked polymer (R), and the monofunctional monomer unit other than acrylic acid esters in the crosslinked rubber polymer (Q) may be any vinyl monomers copolymerizable with methacrylic acid esters or acrylic acid esters. Examples include aromatic vinyl monomers, such as styrene, p-methylstyrene, o-methylstyrene, and vinyl naphthalene; unsaturated nitrile monomers, such as acrylonitrile; olefin monomers, such as ethylene and propylene; vinyl halide monomers, such as vinyl chloride, vinylidene chloride, and vinylidene fluoride; unsaturated carboxylic acid monomers, such as acrylic acid, methacrylic acid, and maleic anhydride; and maleimide monomers, such as vinyl acetate, N-propylmaleimide, N-cyclohexylmaleimide, and N-o-chlorophenylmaleimide. These compounds can be used singly or in a combination of two or more.

The thickness of the outermost layer of the acrylic rubber particles (B) is 3.5 nm or more, preferably 5 nm to 40 nm, more preferably 6 nm to 35 nm, and even more preferably 7.5 to 30 nm. When the thickness of the outermost layer of the acrylic rubber particles (B) is within the above range, the acrylic rubber particles (B) are well dispersed in the curable resin composition.

The glass transition temperature of the crosslinked rubber polymer (Q) that constitutes the inner layer of the acrylic rubber particles (B) is preferably 10°C or less, more preferably 0°C or less, and even more preferably -10°C or less. When the glass transition temperature of the crosslinked rubber polymer (Q) is within the above range, the cured article has better toughness.

The glass transition temperature of the outermost layer of the acrylic rubber particles (B) is preferably 50°C or more, more preferably 60°C or more, and even more preferably 70°C or more. When the glass transition temperature of the outermost layer of the acrylic rubber particles (B) is within the above range, fusion between the acrylic rubber particles (B) is suppressed, a coagulated product of the acrylic rubber particles (B), described later, is easily separated into individual particles during stirring in the curable resin (A), and the acrylic rubber particles are well dispersed in the curable resin composition.

The weight average molecular weight of the hard polymer (P) that constitutes the outermost layer of the acrylic rubber particles (B) is preferably 25000 to 100000, more preferably 30000 to 95000, and even more preferably 35000 to 90000. When the weight average molecular weight is within this range, the cured article of the curable resin composition has better toughness.

It is preferable that part of the outermost layer of the acrylic rubber particles (B) is covalently bonded to the inscribed crosslinked rubber polymer. Such a structure can be formed by incorporating a polyfunctional monomer unit into the monomer unit that constitutes the crosslinked rubber polymer inscribed to the outermost layer. The content of the polyfunctional monomer unit in the crosslinked rubber polymer inscribed to the outermost layer is preferably 0.01 to 3 mass%, and more preferably 0.1 to 2 mass%.

The method for producing the acrylic rubber particles (B) is not particularly limited. Specific examples include a method comprising performing emulsion polymerization of a monomer mixture containing a (meth)acrylic acid ester monomer to obtain a latex containing a multilayered acrylic polymer, coagulating the latex containing a multilayered acrylic polymer to obtain a slurry containing acrylic rubber particles (B), washing and dehydrating the slurry, and drying the dehydrated slurry.

The latex of the acrylic rubber particles having an outermost layer composed of a thermoplastic polymer (P), an inner shell composed of a crosslinked rubber polymer (Q) and in contact with and covered by the outermost layer, and optionally a core composed of a crosslinked polymer (R) can be produced according to a conventional method by polymerization in multiple stages using each monomer mixture, a polymerization initiator, an emulsifier, and the like.

The polymerization initiator used in each polymerization is not particularly limited. Examples of the polymerization initiator include water-soluble inorganic initiators, such as potassium persulfate and ammonium persulfate; redox initiators obtained by combining inorganic initiators with sulfite or thiosulfate; redox initiators obtained by combining organic peroxides with ferrous salts or sodium sulfoxylate; and the like. The polymerization initiator may be added to the reaction system all at once at the start of polymerization, or may be added to the reaction system in divided doses at the start of polymerization and during polymerization while taking into consideration the reaction rate etc. The amount of the polymerization initiator used can be appropriately set so that, for example, the average particle size of the granular material contained in the acrylic rubber particles is within the above range.

The emulsifier used in each polymerization is not particularly limited. Examples of the emulsifier include anionic emulsifiers, such as long-chain alkyl sulfonates, alkyl sulfosuccinate ester salts, and alkyl benzene sulfonates; nonionic emulsifiers, such as polyoxyethylene alkyl ether and polyoxyethylene nonylphenyl ether; nonionic and anionic emulsifiers, such as polyoxyethylene nonylphenyl ether sulfates such as sodium polyoxyethylene nonylphenyl ether sulfate, polyoxyethylene alkyl ether sulfates such as sodium polyoxyethylene alkyl ether sulfate, and alkyl ether carboxylates such as sodium polyoxyethylene tridecyl ether acetate. The amount of the emulsifier used can be appropriately set so that, for example, the average particle size of the granular material contained in the acrylic rubber particles is within the above range.

A chain transfer agent can be used in each polymerization to adjust the molecular weight. The chain transfer agent used in each polymerization is not particularly limited. Examples of the chain transfer agent include alkyl mercaptan compounds, such as n-octyl mercaptan, n-dodecyl mercaptan, t-dodecyl mercaptan, and n-hexadecyl mercaptan; xanthogen disulfide compounds, such as dimethylxanthogen disulfide and diethylxanthogen disulfide; thiuram disulfide compounds, such as tetrathiuram disulfide; halogenated hydrocarbons, such as carbon tetrachloride and ethylene bromide; and the like. The amount of the chain transfer agent used can be set appropriately within the range that allows the polymer to be adjusted to a predetermined molecular weight in each polymerization. The amount of the chain transfer agent used in the polymerization of the outermost layer varies depending on the amount of the polymerization initiator used in the polymerization of the outermost layer, but is preferably 0.05 to 2 parts by mass, and more preferably 0.08 to 1 part by mass, based on the total amount of 100 parts by mass of monomers used in the polymerization of the outermost layer.

In the production method described above, the recovery of the acrylic rubber particles (B) from the above emulsion latex is performed by coagulating the emulsion latex. The latex can be coagulated by a known method. Coagulation methods include freezing coagulation, salting coagulation, acid coagulation, and the like. Preferred among these methods is salting coagulation, which can continuously produce high-quality coagulated products.

The coagulant that can be used in the present invention may be an aqueous solution of an inorganic acid or a salt thereof, or of an organic acid or a salt thereof, which can coagulate and solidify the emulsion polymerization latex.

The emulsion latex used in the coagulation step may be a single latex containing an acrylic multilayered polymer, a mixture of two or more latexes containing an acrylic multilayered polymer, or a mixture of a latex containing an acrylic multilayered polymer and at least one single-layer acrylic polymer latex.

The slurry can be washed and dehydrated using, for example, a filter press, belt press, Guinard centrifuge, or screw decanter centrifuge. In terms of productivity and washing efficiency, it is preferable to use a screw decanter centrifuge. It is preferable to wash and dehydrate the slurry at least twice. The greater the number of times of washing and dehydration, the lower the residual amount of water-soluble components. However, in terms of productivity, the number of times of washing and dehydration is preferable 3 or less.

The water content of the coagulated product after dehydration is preferably 5 to 50 mass%, more preferably 5 to 45 mass%, and even more preferably 5 to 40 mass%. It is preferable to set the water content of the coagulated product after dehydration within the above range because the subsequent drying can be performed sufficiently and a coagulated product with a suitable water content can be obtained after drying.

The turbidity of wastewater discharged during dehydration is preferably 1000 or less, more preferably 700 or less, and even more preferably 400 or less. It is preferable to set the turbidity of wastewater discharged during dehydration within the above range because high solid-liquid separation properties can be obtained, thereby improving product yield and preventing problems such as clogging of the discharge pump strainer.

The coagulated product is dried so that the water content is preferably less than 0.2 mass%, and more preferably less than 0.1 mass%. When the water content is within this range, the acrylic rubber particles (B) are well dispersed in the curable resin composition.

The content of the acrylic rubber particles (B) in the curable resin composition is preferably 3 to 50 mass%, more preferably 4 to 40 mass%, and even more preferably 5 to 30 mass%, based on the total amount of the curable resin composition. For the curable resin composition of the present invention, when the content of the acrylic rubber particles (B) is 3 mass% or more, the cured article has improved toughness, and when the content is 50 mass% or less, the hardness of the cured article of the curable resin composition is not lost, the particles are well dispersed, and excellent surface smoothness can be achieved.

Curing Accelerator

The curable resin composition of the present invention may optionally contain a curing accelerator. A known curing accelerator can be used. For example, when an epoxy resin is used as the curable resin (A), examples of a thermosetting catalyst used for the epoxy resin include urea compounds, such as 3-(3,4-dichlorophenyl)-1,1-dimethylurea (DCMU); imidazole compounds, such as 2-methylimidazole and 2-ethyl-4-methylimidazole; adduct compounds of imidazole compounds and epoxy resins; organic phosphorus compounds, such as triphenylphosphine; borate compounds, such as tetraphenylphosphine tetraphenylborate; diazabicycloundecene (DBU); and the like. These may be used singly or in a combination of two or more.

When the curable resin composition of the present invention contains a curing accelerator, the content of the curing accelerator is preferably 1 part by mass or more and 20 parts by mass or less, and more preferably 2 parts by mass or more and 10 parts by mass or less, based on 100 parts by mass of the curable resin. When the content of the curing accelerator is equal to or more than the lower limit of the above range, the curing speed is better. When the content of the curing accelerator is equal to or less than the upper limit of the above range, the toughness is better.

Other Components

Examples of other components that may be contained in the curable resin composition of the present invention include antioxidants; mold release agents, such as silicone oil, natural wax, and synthetic wax; powders of glass beads, crystalline silica, fused silica, calcium silicate, or alumina; fibers, such as glass fiber and carbon fiber; flame retardants, such as antimony trioxide; halogen trapping agents, such as hydrotalcite and rare earth oxides; colorants, such as carbon black and red iron; silane coupling agents; antifoaming agents; rheology modifiers; flame retardants; pigments; and dyes.

In terms of preventing the oxidative degradation of the resin and obtaining more excellent thermal coloring resistance, the curable resin composition preferably contains an antioxidant.

A known antioxidant can be used as the antioxidant. In terms of antioxidant performance, at least one member selected from the group consisting of phenolic antioxidants, thioether antioxidants, and phosphite antioxidants is preferred, and at least one member selected from the group consisting of phenolic antioxidants and thioether antioxidants is more preferred.

Examples of phenolic antioxidants include dibutylhydroxytoluene, 1,1,3-tris(2-methyl-4-hydroxy-5-tert-butylphenyl)butane, 4,4'-butylidenebis(6-tert-butyl-m-cresol), 3-(3,5-di-tert-butyl-4-hydroxyphenyl) stearyl propionate, pentaerythritol-tetrakis[3-(3,5-di-tert-butyl-4-hydroxyphenyl)propionate], and bis[3-(3-tert-butyl-4-hydroxy-5-methylphenyl) propionic acid][ethylenebis(oxyethylene)]. Preferred among these are 3-(3,5-di-tert-butyl-4-hydroxyphenyl) stearyl propionate and pentaerythritol-tetrakis[3-(3,5-di-tert-butyl-4-hydroxyphenyl)propionate].

Examples of thioether antioxidants include dilauryl-3,3'-thiodipropionate, ditridecyl-3,3'-thiodipropionate, dimyristyl-3,3'-thiodipropionate, distearyl-3,3'-thiodipropionate, lauryl stearyl-3,3'-thiodipropionate, pentaerythritol tetrakis(3-laurylthiopropionate), bis[2-methyl-4-(3-laurylthiopropionyloxy)-5-tert-butylphenyl]sulfide, octadecyl disulfide, mercaptobenzimidazole, 2-mercapto-6-methylbenzimidazole, and 1,1'-thiobis(2-naphthol) (bis[3-(dodecylthio)propionic acid] 2,2-bis[[3-(dodecylthio)-1-oxopropyloxy]methyl]-(1,3-propanediyl)1,3-propanediyl). Preferred among these is (bis[3-(dodecylthio)propionic acid]2,2-bis[[3-(dodecylthio)-1-oxopropyloxy]methyl]-(1,3-propanediyl)1,3-propanediyl).

Examples of phosphite antioxidants include triphenyl phosphite, tris-nonylphenyl phosphite, tris(2,4-di-tert-butylphenyl)phosphite, tridecyl phosphite, trioctyl phosphite, trioctadecyl phosphite, didecyl monophenyl phosphite, dioctyl monophenyl phosphite, diisopropyl monophenyl phosphite, monobutyl diphenyl phosphite, monodecyl diphenyl phosphite, monooctyl diphenyl phosphite, bis(2,6-di-tert-butyl-4-methylphenyl)pentaerythritol diphosphite, 2,2-methylenebis(4,6-di-tert-butylphenyl)octyl phosphite, bis(nonylphenyl)pentaerythritol diphosphite, bis(2,4-di-tert-butylphenyl)pentaerythritol diphosphite, and distearyl pentaerythritol diphosphite. Preferred among these are tris-nonylphenyl phosphite, triphenyl phosphite, tris(2,4-di-tert-butylphenyl)phosphite, bis(2,4-di-tert-butylphenyl)pentaerythritol diphosphite, and bis(2,6-di-tert-butyl-4-methylphenyl)pentaerythritol diphosphite; and more preferred is tris(2,4-di-tert-butylphenyl)phosphite.

When the curable resin composition contains an antioxidant, the content of the antioxidant is preferably 0.0001 parts by mass or more and 10 parts by mass or less based on 100 parts by mass of the curable resin composition. The lower limit is preferably 0.001 parts by mass or more, and more preferably 0.01 parts by mass or more. The upper limit is preferably 6 parts by mass or less, and more preferably 3 parts by mass or less. When the content of the antioxidant is equal to or more than the above lower limit, the thermal coloring resistance tends to be better. On the other hand, when the content of the antioxidant is equal to or less than the above upper limit, a cured article with good surface appearance can be obtained.

Method for Producing Curable Resin Composition

The method for producing the curable resin composition of the present invention is not particularly limited, and a known method can be used.

For example, a curable resin, acrylic rubber particles, and optionally a curing accelerator and other components may be mixed at the same time, or some components (e.g., a curable resin and acrylic rubber particles) may be mixed in advance, and the resulting mixture and the remaining components may be mixed. The mixing method is not particularly limited, and a known mixer, such as a mechanical stirrer, a planetary mixer, a rotation/revolution mixer, a mixing roll such as three rolls, or a kneader, can be used.

After a rubber-containing polymer latex and an epoxy resin are mixed, the aqueous phase may be removed to obtain an epoxy resin composition. A rubber-containing polymer latex, an epoxy resin, and an organic solvent may be mixed, and the aqueous phase and the organic phase may be removed to obtain an epoxy resin composition.

Cured Article

The cured article of the curable resin composition of the present invention can be obtained by adding a curing agent to the curable resin composition, followed by curing.

The curing agent is to cure the curable resin composition, and is used to adjust curability and cured-article properties. As the curing agent, a known curing agent for curable resins can be used. Examples of curing agents for epoxy resins include acid anhydrides, amine compounds, phenol compounds, latent curing agents, and cationic polymerization initiators.

Examples of acid anhydrides include phthalic anhydride, methyltetrahydrophthalic anhydride, methylhexahydrophthalic anhydride, hexahydrophthalic anhydride, tetrahydrophthalic anhydride, trialkyltetrahydrophthalic anhydride, methylhymic anhydride, methylcyclohexenedicarboxylic anhydride, trimellitic anhydride, pyromellitic anhydride, benzophenone tetracarboxylic anhydride, ethylene glycol bistrimellitate, glycerol tristrimellitate, dodecenyl succinic anhydride, polyazelaic anhydride, and poly(ethyloctadecanedioic acid) anhydride. Preferred among these for applications requiring weather resistance, light resistance, heat resistance, etc. are methylhexahydrophthalic anhydride and hexahydrophthalic anhydride. These may be used singly or in a combination of two or more.

Examples of amine compounds include 2,5(2,6)-bis(aminomethyl)bicyclo[2,2,1]heptane, isophoronediamine, ethylenediamine, diethylenetriamine, triethylenetetramine, tetraethylenepentamine, diethylaminopropylamine, bis(4-amino-3-methyldicyclohexyl)methane, diaminodicyclohexylmethane, bis(aminomethyl)cyclohexane, bis(aminomethyl)norbornane, bis(4-aminocyclohexyl)methane, metaphenylenediamine, diaminodiphenylmethane, diaminodiphenylsulfone, diaminodiethyldiphenylmethane, diethyltoluenediamine, diaminodiphenylsulfones such as 3,3'-diaminodiphenylsulfone (3,3'-DDS) and 4,4'-diaminodiphenylsulfone (4,4'-DDS), diaminodiphenyl ether (DADPE), bisaniline, dimethylaniline, triethylenediamine, dimethylbenzylamine, 2,4,6-tris(dimethylaminomethyl)phenol, benzyldimethylaniline, 3,3'-dichloro-4,4'-diaminodiphenylmethane (MOCA), 4,4'-diaminodiphenylmethane, 2,4'-diaminodiphenylmethane, 3,3'-diaminodiphenylmethane, 3,4'-diaminodiphenylmethane, 2,2'-diaminobiphenyl, 3,3'-diaminobiphenyl, 2,4-diaminophenol, 2,5-diaminophenol, o-phenylenediamine, m-phenylenediamine, p-phenylenediamine, m-xylylenediamine, 2,3-tolylenediamine, 2,4-tolylenediamine, 2,5-tolylenediamine, 2,6-tolylenediamine, 3,4-tolylenediamine, methylthiotoluenediamine, diethyltoluenediamine, and dicyandiamide. These may be used singly or in a combination of two or more.

Examples of phenol compounds include phenol novolac resins, cresol novolac resins, bisphenol A, bisphenol F, bisphenol AD, and diallylated derivatives of these bisphenol compounds. These may be used singly or in a combination of two or more.

The latent curing agent is a compound that is solid at room temperature and liquefies during heating and curing of the epoxy resin composition and acts as a curing agent.

Examples of latent curing agents include dicyandiamide, carbohydrazide, oxalic acid dihydrazide, malonic acid dihydrazide, succinic acid dihydrazide, iminodiacetic acid dihydrazide, adipic acid dihydrazide, pimelic acid dihydrazide, suberic acid dihydrazide, azelaic acid dihydrazide, sebacic acid dihydrazide, dodecane dihydrazide, hexadecane dihydrazide, maleic acid dihydrazide, fumaric acid dihydrazide, diglycolic acid dihydrazide, tartaric acid dihydrazide, malic acid dihydrazide, isophthalic acid dihydrazide, terephthalic acid dihydrazide, 2,6-naphthoic acid dihydrazide, 4,4'-bisbenzene dihydrazide, 1,4-naphthoic acid dihydrazide, Amicure VDH (product name, produced by Ajinomoto Co., Inc., registered trademark), Amicure UDH (product name, produced by Ajinomoto Co., Inc., registered trademark), citric acid trihydrazide, and other organic acid hydrazides. These may be used singly or in a combination of two or more.

Examples of cationic polymerization initiators include diallyliodonium salts, triallylsulfonium salts, aliphatic sulfonium salts, and the like containing $BF_4$, $PF_6$, $AsF_6$, and $SbF_6$ as counteranions. Usable commercial products include SP70, SP172, and CP66 (produced by ADEKA), CI2855 and CI2823 (produced by Nippon Soda Co., Ltd.), SI-100L and SI-150L (produced by Sanshin Chemical Industry Co., Ltd.), and the like. These may be used singly or in a combination of two or more.

When a compound having at least two polymerizable unsaturated bonds in the molecule, such as an unsaturated polyester resin, epoxy (meth)acrylate, or urethane (meth)acrylate, is used as the curable resin (A), a radical initiator can be used as the curing agent.

Examples of radical initiators include organic peroxides, such as benzoyl peroxide, cumene hydroperoxide, dicumyl peroxide, lauroyl peroxide, di-t-butyl peroxide, t-butyl hydroperoxide, methyl ethyl ketone peroxide, t-butyl peroxybenzoate, t-butylperoxy-2-ethylhexanoate, and t-butyl peroxyoctanoate; and azo compounds, such as azobisisobutyronitrile. In terms of curing the curable resin (A) more effectively, preferred is one or more members selected from the group consisting of benzoyl peroxide, cumene hydroperoxide, dicumyl peroxide, and methyl ethyl ketone peroxide; and more preferred are cumene hydroperoxide and methyl ethyl ketone peroxide. These may be used singly or in a combination of two or more.

The radical initiator is optionally used together with a curing aid and/or a co-catalyst.

The curing aid is an additive that acts as a catalyst for the decomposition reaction of the radical initiator (radical generation reaction). Examples include metal salts of naphthenic acid or octenoic acid (cobalt salts, tin salts, lead salts, etc.). In terms of improving toughness and appearance, cobalt naphthenate is preferred. When a curing accelerator is added, in order to prevent the sudden onset of the curing reaction, it is preferable to add 0.1 to 1 part by mass thereof based on 100 parts by mass of the curable resin (A) immediately before the curing reaction.

The co-catalyst is an additive for enabling the radical initiator to decompose even at a low temperature and radical generation at a low temperature. Examples include amine compounds, such as N,N-dimethylaniline, triethylamine, and triethanolamine. Preferred is N,N-dimethylaniline, which allows an efficient reaction. When a co-catalyst is added, the amount thereof is preferably 0.01 to 0.5 parts by mass based on 100 parts by mass of the component (A), or 1 to 15 parts by mass based on 100 parts by mass of the radical initiator.

The content of the curing agent can be appropriately selected depending on the type of curing agent. For example, when the curing agent is dicyandiamide, the content thereof is preferably 3 parts by mass or more and 20 parts by mass or less, and more preferably 3 parts by mass or more and 12 parts by mass or less, based on 100 parts by mass of the epoxy resin. When the content of the curing agent is equal to or more than the lower limit of the above range, the adhesive strength after curing is more excellent. When the content of the curing agent is equal to or lower than the upper limit of the above range, the curable resin composition has more excellent pot life.

The methods of adding a curing agent, a curing aid, and a co-catalyst to the curable resin composition are not particularly limited, and known methods can be used.

For example, the curable resin (A) and acrylic rubber particles (B), which constitute the curable resin composition, a curing agent, and optionally a curing accelerator and other components may be mixed at the same time, or after the curable resin composition is produced in advance, a curing agent and optionally a curing aid, a co-catalyst, and the like may be mixed. The mixing method is not particularly limited, and a known mixer mentioned above can be used.

The method for curing the curable resin composition of the present invention is not particularly limited. Conventional curing methods for curable resin compositions can be used, and typically a thermal curing method is used.

The curable resin composition of the present invention is useful as an adhesive, a molding material, or the like because the acrylic rubber particles are well dispersed in the curable resin, and a cured article with excellent surface smoothness can be obtained.

Examples of adhesives include adhesives for structural use in automobiles and other vehicles, civil engineering and construction, electronic materials, general office use, medical use, and industrial use. Examples of adhesives for electronic materials include interlayer adhesives for multilayer boards such as build-up boards, adhesives for semiconductors, such as die bonding agents and underfills, and adhesives for packaging such as BGA reinforcing underfills, anisotropic conductive films (ACFs), and anisotropic conductive pastes (ACPs).

Examples of molding materials include sheets, films, fiber-reinforced composite materials (FRP), and the like. Applications of molding materials include aircraft, automobiles, sporting goods, wind turbines, and the like.

However, the applications of the curable resin composition of the present invention are not limited to the above, and it can be used for other applications as well. For example, the curable resin composition of the present invention can be used for various applications in which thermosetting resins, such as epoxy resins, are used. Examples of such applications include paints, coating agents, insulating materials (including printed circuit boards, wire coatings, etc.), sealants, and the like. Examples of sealants include potting, dipping, and transfer molding sealing for capacitors, transistors, diodes, light-emitting diodes, ICs, LSIs, and the like, potting sealing for COB, COF, TAB, and the like for ICs and LSIs, underfills for flip chips and the like, sealing in packaging IC packages, such as QFPs, BGAs, and CSPs (including underfills for reinforcement), and the like.

Examples

The present invention is described in more detail below with reference to Examples. The present invention is not limited by the Examples.

Physical properties etc. were measured by the following methods.

Glass Transition Temperature

The glass transition temperature was calculated from the monomer formulation of each layer of the acrylic rubber particles (B) using the Tg value of each homopolymer according to the following Fox equation.

$$1/Tg = w_1/Tg_1 + w_2/Tg_2 + \ldots + w_n/Tg_n$$

MMA: 105°C
BA: -54°C
MA: 9°C
MAA: 228°C
GMA: 74°C

Volume Average Particle Size

Using an emulsion containing the acrylic rubber particles (B), the volume average particle size (median diameter) was determined by a light-scattering method using a laser scattering particle size distribution analyzer (LA-950V2, produced by Horiba, Ltd.)

Thickness of Outermost Layer

The thickness of the outermost layer was calculated according to the following formula using the particle size of the acrylic rubber particles (B) determined by the above method and the inner layer ratio, which is the percentage of a value obtained by subtracting the total value of monomer units that constitute the outermost layer (d) from the total value of monomer units that constitute the acrylic rubber particles (B), in the total value of monomer units that constitute the acrylic rubber particles (B).

$$\text{Thickness of outermost layer} = \left( \frac{\text{Particle size}}{2} \right) - \left( \frac{\text{Particle size}}{2} \times \text{Inner layer ratio}^{1/3} \right)$$

Dispersion State of Acrylic Rubber Particles

The dispersion state of the acrylic rubber particles (B) in the curable resin compositions obtained in the Examples and Comparative Examples was evaluated according to JIS K 5600-2-5 using a grind gauge. The scale was read at the point where 5 or more particles appeared in a 3-mm-wide band along the groove of the gauge, and evaluated based on the following criteria.

A: a reading value of 1 $\mu$m or less
C: a reading value of more than 1 $\mu$m

Surface Smoothness of Cured Article

The surface of the cured articles of the curable resin compositions obtained in the Examples and Comparative Examples was observed with an optical microscope and evaluated based on the following criteria.

A: smooth without unevenness
B: slight unevenness
C: unevenness on most of the surface

Examples of Various Materials

For the curable resin (A) according to the present invention, the materials listed below were used.

Curable resin (A-1): Celloxide 2021P, produced by Daicel Corporation
Curable resin (A-2): jER828, produced by Mitsubishi Chemical Corporation
Curable resin (A-3): Neopol 8250L, produced by Japan U-Pica Co., Ltd.

The abbreviations indicate the following substances.

MMA: methyl methacrylate
MA: methyl acrylate
ALMA: allyl methacrylate
BA: butyl acrylate
St: styrene
MAA: methacrylic acid
GMA: glycidyl methacrylate
nOM: n-octyl mercaptan

Production Example 1

147.7 parts by mass of deionized water, 0.024 parts by mass of sodium alkyl diphenyl ether disulfonate, and 0.15 parts by mass of sodium carbonate were placed in a reactor equipped with a stirrer, a thermometer, a nitrogen gas inlet, a monomer inlet tube, and a reflux condenser. After the inside of the reactor was sufficiently replaced with nitrogen gas to constitute a substantially oxygen-free state, the internal temperature was set to 80°C. 0.67 parts by mass of a potassium persulfate 3% aqueous solution was added thereto, followed by stirring for 5 minutes. Then, 10.02 parts by mass of a monomer mixture with the formulation shown in "First layer" of Table 1 below was continuously added dropwise thereto over 25 minutes. After completion of the dropwise addition, the polymerization reaction was further performed for 20 minutes so that the polymerization conversion rate was 98% or more.

Then, 1.67 parts by mass of a potassium persulfate 3% aqueous solution was added to the reactor, followed by stirring for 5 minutes. Then, 51.6 parts by mass of a monomer mixture with the formulation shown in "Second layer" of Table 1 below was continuously added dropwise thereto over 90 minutes. After completion of the dropwise addition, the polymerization reaction was further performed for 90 minutes so that the polymerization conversion rate was 98% or more.

Then, 40.32 parts by mass of a monomer mixture with the formulation shown in "Third layer" of Table 1 below was continuously added dropwise to the reactor over 60 minutes. After completion of the dropwise addition, the polymerization reaction was further performed for 30 minutes so that the polymerization conversion rate was 98% or more, thereby obtaining a latex containing acrylic rubber particles (B-1) with a volume average particle size of 0.26 $\mu$m.

Subsequently, 500 parts by mass of ion exchange water and 2.4 parts by mass of magnesium sulfate heptahydrate were added to 300 parts by mass of the latex containing the acrylic rubber particles (B-1), and while stirring, the liquid temperature was raised to 86°C. While maintaining the liquid temperature at 86°C, stirring was continued for 1.1 hours, thereby obtaining an agglomerated slurry. Further, the slurry was heated to 105°C, and stirring was continued for 1.6 hours while maintaining the liquid temperature at 105°C, thereby obtaining a granulated slurry. The obtained granulated slurry was washed and dehydrated using a perforated-basket centrifugal dehydrator, and dried, thereby obtaining a coagulated powder of the acrylic rubber particles (B-1).

Table 1

| | | | Production Example 1 | Production Example 2 | Production Example 3 | Production Example 4 | Production Example 5 | Production Example 6 |
|---|---|---|---|---|---|---|---|---|
| | | | B-1 | B-2 | B-3 | B-4 | B-5 | B-6 |
| Monomer mixture [parts by mass] | First layer | MMA | 9.4 | 9.4 | 9.4 | 9.4 | 9.4 | 9.4 |
| | | MA | 0.6 | 0.6 | 0.6 | 0.6 | 0.6 | 0.6 |
| | | ALMA | 0.02 | 0.02 | 0.02 | 0.02 | 0.02 | 002 |
| | Second layer | BA | 41.1 | 41.1 | 41.1 | 41.1 | 65.76 | 41.1 |
| | | St | 8.9 | 8.9 | 8.9 | 8.9 | 14.24 | 8.9 |
| | | ALMA | 16 | 1.6 | 2 | 2 | 256 | 1.6 |
| | Third layer | MMA | 38.8 | 38.8 | 40 | 38.8 | 9.7 | 6.8 |
| | | BA | 0 | 0 | 0 | 0 | 0 | 32 |
| | | MA | 0 | 0 | 0 | 0 | 0 | 0 |
| | | MAA | 1.2 | 1.2 | 0 | 0 | 0.3 | 1.2 |
| | | GMA | 0 | 0 | 0 | 1.2 | 0 | 0 |
| | | nOM | 0.3204 | 0.3204 | 0.196 | 0.3204 | 0.0801 | 0.3204 |
| Midpoint glass transition temperature of third layer | °C | | 125 | 125 | 120 | 118 | 125 | -26 |
| Volume average particle size | $\mu$m | | 0.26 | 0.10 | 0.29 | 0.25 | 0.10 | 0.26 |
| Thickness of outermost layer | nm | | 20 | 8 | 23 | 20 | 2 | 20 |

Production Example 2

A latex and coagulated powder of acrylic rubber particles (B-2) were obtained in the same manner as in Production Example 1, except that the amount of sodium alkyl diphenyl ether disulfonate added was changed to 1.88 parts by mass. The volume average particle size of the acrylic rubber particles (B-2) in the latex was 0.10 $\mu$m.

Production Example 3

A latex of acrylic rubber particles (B-3) was obtained in the same manner as in Production Example 1, except that the formulation of the monomer mixture was changed as shown in Table 1. Further, a coagulated powder of the acrylic rubber particles (B-3) was obtained in the same manner as in Production Example 1, except that the amount of magnesium sulfate heptahydrate added was changed to 6 parts by mass, the liquid temperature during agglomeration was set to 40°C, and the liquid temperature during granulation was set to 90°C. The volume average particle size of the acrylic rubber particles (B-3) in the latex was 0.29 $\mu$m.

Production Example 4

A latex and coagulated powder of acrylic rubber particles (B-4) were obtained in the same manner as in Production Example 1, except that the formulation of the monomer mixture was changed as shown in Table 1. The volume average particle size of the acrylic rubber particles (B-4) in the latex was 0.25 $\mu$m.

Production Example 5

A latex and coagulated powder of acrylic rubber particles (B-5) were obtained in the same manner as in Production Example 1, except that the amount of sodium alkyl diphenyl ether disulfonate added was changed to 1.88 parts by mass, and the formulation of the monomer mixture was changed as shown in Table 1. The volume average particle size of the acrylic rubber particles (B-5) in the latex was 0.10 um.

Production Example 6

A latex and coagulated powder of acrylic rubber particles (B-6) were obtained in the same manner as in Production Example 1, except that the formulation of the monomer mixture was changed as shown in Table 1. The volume average particle size of the acrylic rubber particles (B-6) in the latex was 0.26 $\mu$m.

Example 1

95 parts by mass of the curable resin (A-1) and 5 parts by mass of the coagulated powder of the acrylic rubber particles (B-1) were added to a glass separable flask equipped with a mechanical stirrer with a half-moon stirring blade, and stirred while warming at 60°C at a stirring speed of 600 rpm for 3 hours to obtain a curable resin composition (C-1). The dispersion state of the acrylic rubber particles (B-1) in the curable resin composition (C-1) was rated A.

1 part by mass of a curing agent (SI-150L, produced by Sanshin Chemical Industry Co., Ltd.) was added to 100 parts by mass of the obtained curable resin composition (C-1), followed by stirring. Then, the resulting mixture was casted in a PTFE Petri dish, and heated in a box dryer at 160°C for 1 hour and then at 180°C for 1 hour, thereby obtaining a cured article of the curable resin composition (C-1). The surface smoothness of the obtained cured article was rated A.

Examples 2 and 5 to 7 and Comparative Examples 1 and 2

Curable resin compositions (C-2 and 5 to 9) and cured articles thereof were obtained in the same manner as in Example 1, except that the formulations of the curable resin compositions were changed as shown in Tables 2 and 3. Tables 2 and 3 show the evaluation results.

Example 3

A curable resin composition (C-3) was obtained in the same manner as in Example 1, except that the formulation of the curable resin composition was changed as shown in Table 2.

1 part by mass of Permek N (produced by NOF Corporation) and 0.5 parts by mass of 6% cobalt naphthenate (produced by FUJIFILM Wako Pure Chemical Corporation) were added to 100 parts by mass of the obtained curable resin composition (C-3), followed by stirring. Then, the resulting mixture was casted in a PTFE Petri dish, allowed to stand at 23°C for 16 hours, and then heated in a box dryer at 60°C for 2 hours, then at 80°C for 2, and then at 120°C for 2 hours, thereby obtaining a cured article of the curable resin composition (C-3). Table 2 shows the evaluation results.

Example 4

A curable resin composition (C-4) and a cured article thereof were obtained in the same manner as in Example 3, except that the formulation of the curable resin composition was changed as shown in Table 2. Table 2 shows the evaluation results.

Table 2

| | | | Example 1 | Example 2 | Example 3 | Example 4 | Example 5 | Example 6 | Example 7 |
|---|---|---|---|---|---|---|---|---|---|
| | | | C-1 | C-2 | C3 | C-4 | C-5 | C-6 | C-7 |
| Curable resin composition [parts by mass] | Curable resin (A) | A-1 | 95 | | | | 95 | 95 | 95 |
| | | A-2 | | 95 | | | | | |
| | | A-3 | | | 95 | 90 | | | |
| | Acrylic rubber particles (B) | B-1 | 5 | 5 | 5 | 10 | | | |
| | | B-2 | | | | | 5 | | |
| | | B-3 | | | | | | 5 | |
| | | B-4 | | | | | | | 5 |
| Evaluation | Dispersion state of acrylic rubber particles | - | A | A | A | A | A | A | A |
| | Surface smoothness of cured article | - | A | B | A | A | B | B | A |

Table 3

| | | | Comparative Example 1 | Comparative Example 2 |
|---|---|---|---|---|
| | | | C-8 | C-9 |
| Curable resin composition [parts by mass] | Curable resin (A) | A-1 | 95 | 95 |
| | Acrylic rubber particles (B) | B-5 | 5 | |
| | | B-6 | | 5 |
| Evaluation | Dispersion state of acrylic rubber particles | - | C | C |
| | Surface smoothness of cured article | - | C | C |

As shown in Table 2, the curable resin compositions obtained in Examples 1 to 7 have excellent dispersibility of acrylic rubber particles and can give cured articles with excellent surface smoothness. On the other hand, as shown in Table 3, the curable resin compositions obtained in Comparative Examples 1 and 2 had problems that the dispersibility of the acrylic rubber particles was low, and the coagulated products of the acrylic rubber particles remained to reduce the surface smoothness of the cured articles. Thus, these compositions were inferior to those of Examples 1 to 7.

**Claims**

1. A curable resin composition comprising a curable resin (A) and acrylic rubber particles (B),

   the acrylic rubber particles (B) having a multilayer structure of two or more layers including an inner layer comprising a crosslinked rubber polymer comprising an acrylic acid ester unit, and an outermost layer comprising a hard polymer,
   the outermost layer of the acrylic rubber particles (B) having a thickness of 3.5 nm or more.

2. The curable resin composition according to claim 1,
   wherein the curable resin (A) is at least one member selected from the group consisting of an epoxy resin, an unsaturated polyester resin, epoxy (meth)acrylate, and urethane (meth)acrylate.

3. The curable resin composition according to claim 1,
   wherein the outermost layer of the acrylic rubber particles (B) comprises at least one member selected from the group consisting of a carboxyl group-containing monomer unit (x) and an epoxy group-containing monomer unit (y).

4. The curable resin composition according to claim 1,
   wherein the carboxyl group-containing monomer unit (x) is at least one member selected from the group consisting of acrylic acid and methacrylic acid.

5. The curable resin composition according to claim 1,
   wherein the epoxy group-containing monomer unit (y) is glycidyl (meth)acrylate.

6. The curable resin composition according to claim 1,
   wherein the outermost layer of the acrylic rubber particles (B) has a glass transition temperature of 50°C or more.

7. The curable resin composition according to any one of claims 1 to 6, wherein part of the outermost layer of the acrylic rubber particles (B) is covalently bonded to the inscribed crosslinked rubber polymer.

8. An adhesive comprising the curable resin composition according to claim 1.

9. A molding material comprising the curable resin composition according to claim 1.

10. A cured article of the curable resin composition according to claim 1.

# EP 4 471 095 A1

## INTERNATIONAL SEARCH REPORT

International application No.

**PCT/JP2023/001941**

### A. CLASSIFICATION OF SUBJECT MATTER

***C08L 101/00***(2006.01)i; ***C08F 265/06***(2006.01)i; ***C08L 63/00***(2006.01)i
FI: C08L101/00; C08F265/06; C08L63/00 A

According to International Patent Classification (IPC) or to both national classification and IPC

### B. FIELDS SEARCHED

Minimum documentation searched (classification system followed by classification symbols)

C08L101/00; C08F265/06; C08L63/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 2012-207215 A (SEKISUI PLASTICS CO., LTD.) 25 October 2012 (2012-10-25) claims, production example 1, fig. 1 | 1, 2, 7, 9, 10 |
| A | | 3-6, 8 |
| X | JP 10-139973 A (KURARAY CO., LTD.) 26 May 1998 (1998-05-26) claims, paragraphs [0026], [0034], examples 1, 7, table 1 | 1-5, 7, 9-10 |
| A | | 6, 8 |
| A | JP 2013-151654 A (NIPPON A&L INC.) 08 August 2013 (2013-08-08) entire text, all drawings | 1-10 |
| A | WO 2014/162369 A1 (KANEKA CORP.) 09 October 2014 (2014-10-09) entire text | 1-10 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 March 2023** | **28 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/001941**

| Patent document cited in search report | | | Publication date (day/month/year) | Patent family member(s) | Publication date (day/month/year) |
|---|---|---|---|---|---|
| JP | 2012-207215 | A | 25 October 2012 | (Family: none) | |
| JP | 10-139973 | A | 26 May 1998 | (Family: none) | |
| JP | 2013-151654 | A | 08 August 2013 | (Family: none) | |
| WO | 2014/162369 | A1 | 09 October 2014 | US 2016/0053104 A1 entire text<br>EP 2982711 A1<br>CN 105102534 A<br>KR 10-2015-0139906 A | |

Form PCT/ISA/210 (patent family annex) (January 2015)

**REFERENCES CITED IN THE DESCRIPTION**

**Patent documents cited in the description**

- WO 201553289 A

- WO 2020213642 A